**Europäisches Patentamt**

**European Patent Office**

**Office européen des brevets**

(11) Veröffentlichungsnummer: **0 308 532**

**A1**

# EUROPÄISCHE PATENTANMELDUNG

(21) Anmeldenummer: 87113950.7

(51) Int. Cl.⁴: **F25B 49/00**

(22) Anmeldetag: 23.09.87

(43) Veröffentlichungstag der Anmeldung:
29.03.89 Patentblatt 89/13

(84) Benannte Vertragsstaaten:
**AT BE CH DE ES FR GB GR IT LI LU NL SE**

(71) Anmelder: **VIA Gesellschaft für Verfahrenstechnik mbH**
**Heerdter Lohweg 63-71**
**D-4000 Düsseldorf 11(DE)**

(72) Erfinder: **Burk, Juergen**
**Rottgaerten 10**
**D-4000 Duesseldorf(DE)**

(74) Vertreter: **Stratmann, Ernst, Dr.-Ing.**
**Schadowplatz 9**
**D-4000 Düsseldorf 1(DE)**

(54) **Drucklufttrockner.**

(57) Es wird ein Drucklufttrockner (10) beschrieben, der einen Kältemittelkreislauf (32) besitzt, bestehend aus der Hintereinanderschaltung einer Kompressoreinrichtung (34), einem nachgeschalteten Kondensator (38), einem diesem nachgeschalteten Gas-Kältemittel-Wärmetauscher (14) und einer Rückführleitung (44) von dem Kältemittel-Wärmetauscher (14) zu der Kompressoreinrichtung (34), wobei die Kompressoreinrichtung, die von einer Schalteinrichtung (52) hinsichtlich ihres Betriebsverhaltens ansteuerbar weist, mehrere, vorzugsweise drei jeweils getrennt voneinander betreibbare Kompressoreinheiten (A, B, C) umfaßt, die gleiche oder auch unterschiedliche Nennleistung aufweisen können und je nach Lastanforderungen von der Schalteinrichtung (52) gemeinsam oder einzeln temperatur- und/oder zeitgesteuert in Betrieb gesetzt werden können.

Fig. 1.

EP 0 308 532 A1

# Drucklufttrockner

Die Erfindung betrifft einen Drucklufttrockner mit einem Kältemittelkreislauf, der die Hintereinanderschaltung einer Kompressoreinrichtung mit nachgeschaltetem Kondensator, einer Zuführleitung zu einem Gas-Kältemittel und einer Rückführleitung von diesem zur Kompressoreinrichtung umfaßt, wobei die Kompressoreinrichtung von einer Schalteinrichtung ansteuerbar ist, die ihrerseits Temperaturmeßdaten des Drucklufttrockners auswertet.

Die heutige Drucklufttechnik erfordert Einsatz von Drucklufterzeugungsanlagen und Drucklufttrockner, die für die Erzeugung einer bestimmten Menge von trockener Druckluft möglichst wenig Energie verbraucht.

Der Drucklufttrockner der eingangs genannten Art, siehe dazu die DE-OS 35 22 974, ermöglicht eine recht gute Trocknung bei vertretbarem Energieaufwand. Bei der Hintereinanderschaltung von Kompressor, Kondensator, Gas-Kältemittel-Wärmetauscher und Rückführung zum Kompressor innerhalb des Kältemittelkreislaufes wird zur Energieeinsparung als eine Alternative der Kompressor des Kältemittelkreislaufes mittels eines Meßfühlers ein- und ausgeschaltet, der die Temperatur z. B. des aus dem Gas-Kältemittel-Wärmetauscher austretenden Gases mißt. Diese Regelung entspricht dem Prinzip der Thermostatsteuerung von Haushaltskühlschränken und Haushaltsgefriertruhen. In der Druckschrift wird diese Art der Regelung jedoch als für bestimmte Anwendungsfälle zu träge bezeichnet. Alternativ wird die Messung der Temperatur des Kältemittels z. B. bei ihrem Austritt aus dem Gas-Kältemittel-Wärmetauscher gemessen und damit eine Ein-Aus-Steuerung des Kompressors vorzusehen. Diese Regelung ist etwas schneller, hat aber gemäß der Druckschrift noch den Nachteil einer verhältnismäßig großen Hysterese und damit einer relativ großen Temperaturschwankung. Statt dessen wird eine Regelung mit Hilfe einer Bypassleitung als günstigste Lösung angegeben, bei der das aus dem Kompressor austretende Heißgas über eine Rückführleitung mit Regelventil dem aus dem Gas-Kältemittel-Wärmetauscher kommenden Kältemittel-Gasstrom zugesetzt wird.

Obwohl der beschriebene Drucklufttrockner zufriedenstellend arbeitet, ist man bestrebt, noch weitere Verbesserungen vorzunehmen, insbesondere Hinsichtlich des Wirkungsgrades bei größeren Drucklufttrocknern, wie auch hinsichtlich der Betriebssicherheit, die insbesondere bei größeren Anlagen von größer Bedeutung sein kann, weil bei derartigen größeren Anlagen meist sehr große Anlagenteile ausfallen, falls der Drucklufttrockner durch Kompressorausfall oder durch Wartungsarbeiten am Kompressor ausgeschaltet werden muß.

Aufgabe der Erfindung ist es, den bekannten Drucklufttrockner dahingehend zu verbessern, daß der Wirkungsgrad insbesondere für Anlagen größerer Betriebsleistung noch weiter verbessert und insbesondere Langzeitbetriebsverfügbarkeit noch erhöht wird.

Gelöst wird die Aufgabe dadurch, daß die Kompressoreinrichtung aus mehreren, vorzugsweise drei im Kältemittelkreislauf parallelgeschalteten, voneinander unabhängigen Kompressoreinheiten besteht, die von der Schalteinrichtung getrennt ansteuerbar sind.

Durch diese Maßnahmen wird zwar der Materialaufwand - es werden statt einer Kompressoreinheit deren zwei, drei oder auch mehr vorgesehen - erhöht, jedoch gewinnt man dadurch die Möglichkeit der separaten Ansteuerung dieser unabhängig voneinander arbeitenden Kompressoren sowohl Flexibilität bei der Drucklufttrocknung wie auch Sicherheit bei Ausfall von einzelnen Kompressoreinheiten und Energiekosteneinsparungen bei Teillastbetrieb.

Die Schalteinrichtung kann so aufgebaut sein, daß sie von einem die Temperatur der Druckluft am Anlagenausgang erfassenden Sensor angesteuert wird, alternativ von einem die Temperatur der Druckluft am Ausgang oder am Eingang (vorzugsweise direkt hinter dem Drosselorgan) des Gas-Kältemittel-Wärmetauschers erfassenden Sensor. Zusätzlich könnte auch die Temperatur des der Kompressoreinrichtung zugeführten Kühlmittels ausgewertet werden. Die Schalteinrichtung ist dann z. B. derart aufgebaut, daß bei tiefer Temperatur nur ein Kompressor in Tätigkeit gehalten wird, so daß Reibungsverluste, Strömungswiderstandsverluste und sonstige Leerlaufverluste, die bei größeren Kompressoreinheiten zusätzlich entstehen würden, hier wegfallen. Überschreitet die Temperatur einen ersten Grenzwert, könnte durch entsprechenden Aufbau der Schalteinrichtung ein zweiter Kompressor, bei Überschreiten eines weiteren Grenzwertes ein dritter Kompressor, usw., eingeschaltet werden und so eine sehr flexible Anpassung an den jeweiligen Druckluftkühlungsbedarf erreicht wird, wobei jeweils nur die für die Kühlung bzw. Trocknung der angeforderten Druckluftmenge benötigte Kompressorleistung in Betrieb ist.

Es gibt bereits Einrichtungen, bei denen durch Abschaltung einzelner Zylinder eines Kompressors eine gewisse Anpassung an erforderliche Kompressorleistung erreicht wird. Jedoch ist diese Lösung deshalb nicht optimal, weil auch die leer laufenden Zylinder noch verhältnismäßig viel Energie schlukken, insbesondere durch die viel Energie verbrauchende Hubbewegung der Kolben. Außerdem entfällt bei einer derartigen Lösung die Möglichkeit, einzelne Kompressoreinheiten bei Weiterlaufen der anderen Kompressoreinheiten zu warten, ggf. auch auszutauschen. Erfindungsgemäß sind nun derartige Wartungsarbeiten auch bei Weiterlaufen der Kompressoreinrichtung möglich und es läßt sich dadurch erreichen, daß die durch Kompressorausfall normalerweise entstehenden Stillstandszeiten u. U. völlig wegfallen.

Die Schalteinrichtung könnte auch derart aufgebaut sein, daß nach einer bestimmten Betriebszeit beispielsweise der dritte Kompressor (falls insgesamt drei Kompressoren vorhanden sind) an die Stelle des ersten Kompressors tritt, was insofern recht sinnvoll ist, als dadurch die mittlere Betriebszeit dieser beiden Kompressoren annähernd gleich bleibt, unabhängig davon, wie lange die Gesamtanlage mit jeweils nur einem Kompressor arbeitet (anstelle des dritten Kompressors könnte auch der zweite Kompressor treten, falls die Gesamtanlage nur zwei Kompressoren aufweist).

Es ist meist günstig, die Kompressoreinheiten so aufzubauen, daß sie aus einem elektrischen Motor mit angeschlossenem Kompressor in einem hermetisch gekapselten Gehäuse bestehen. Derartige hermetisch gekapselte Kompressoreinheiten sind besonders betriebssicher und lassen sich in verschiedenen Leistungsstufen bauen. Weist der erfindungsgemäße Drucklufttrockner drei Kompressoreinheiten mit den Leistungen A, B bzw. C auf, könnte A = B = C sein und die Schalteinrichtung derart aufgebaut sein, daß zunächst mit der Leistungsstufe A, anschließend mit der Leistungsstufe A + B = 2A und schließlich mit der Leistungsstufe A + B + C = 3A gearbeitet wird. Dadurch ist eine lineare Stufenkennlinie verwirklicht.

Eine andere Möglichkeit ist es, A = C aber B = 2A zu machen. Wenn dann die Schalteinrichtung derart aufgebaut wird, daß die Grundlast von dem Kompressor mit der Leistung A oder dem mit der Leistung C (= A) geliefert wird, während bei Lasterhöhung zunächst A und C parallelgeschaltet werden, was eine Leistungsverdoppelung (2A) bedeutet, bei Weitererhöhung der Leistungsanforderung schließlich der Kompressor B mit der Leistung 2A mit zunächst nur einem der Kompressoren A oder C (Verdreifachung der Leistung) und schließlich mit beiden Kompressoren A und C zugeschaltet wird, was eine Vervierfachung der Leistung ergibt, stellt dies eine Erhöhung in vier Stufen dar, was bei bestimmten Anwendungsfällen von Vorteil sein kann.

Eine noch andere Möglichkeit ist die, B = 2A und C = 4A zu machen und die Steuerung derart vorzunehmen, daß die Grundlast von A getragen wird, bei Lasterhöhungen jedoch umgeschaltet wird auf zunächst B (Leistungsverdoppelung), B + A (Verdreifachung), auf C (Vervierfachung der Leistung), C + A (Verfünffachung), C + B (Versechsfachung) und schließlich C + B + A (Versiebenfachung).

Diese Steuerungsmöglichkeit ist besonders feinstufig und führt zu besonders genauer Anpassung der druckluftabkühlenden Kompressorleistung an den Druckluftbedarf und damit zu einem besonders hohen Wirkungsgrad, bei Anwendung von lediglich drei Kompressoren jeweils doppelter Leistung.

Aus energietechnischen und strömungstechnischen Gründen ist es günstig und trägt ebenfalls zur Erhöhung des Wirkungsgrades bei, wenn alle Einrichtungen, die strömendes Medium führen, möglichst eng zusammen angeordnet werden. Dadurch reduzieren sich die durch Strömungswiderstände in Verbindungsleitungen entstehenden Verluste. Aus dem gleichen Grunde ist es günstig, wenn die Wärmeaustauscher der Druck lufttrockner senkrecht angeordnete zylindrische Gehäuse aufweisen, die ihrerseits in engem Abstand zueinander angeordnet sind. Die senkrechte Anordnung verbessert nicht nur die Kompaktheit der Gesamtanlage, sie ist auch strömungstechnisch günstig.

Die Erfindung wird nachfolgend anhand von Ausführungsbeispielen näher erläutert, die in den Zeichnungen dargestellt sind.

Es zeigt:

Fig. 1 diagrammartig einen erfindungsgemäßen Drucklufttrockner mit drei Kompressoreinheiten,

Fig. 2 eine praktische Ausführungsform des in Fig. 1 dargestellten Drucklufttrockners in einer Ansicht von oben, und

Fig. 3 die Ausführungsform der Fig. 2 in einer Ansicht gemäß der Pfeile III-III der Fig. 2.

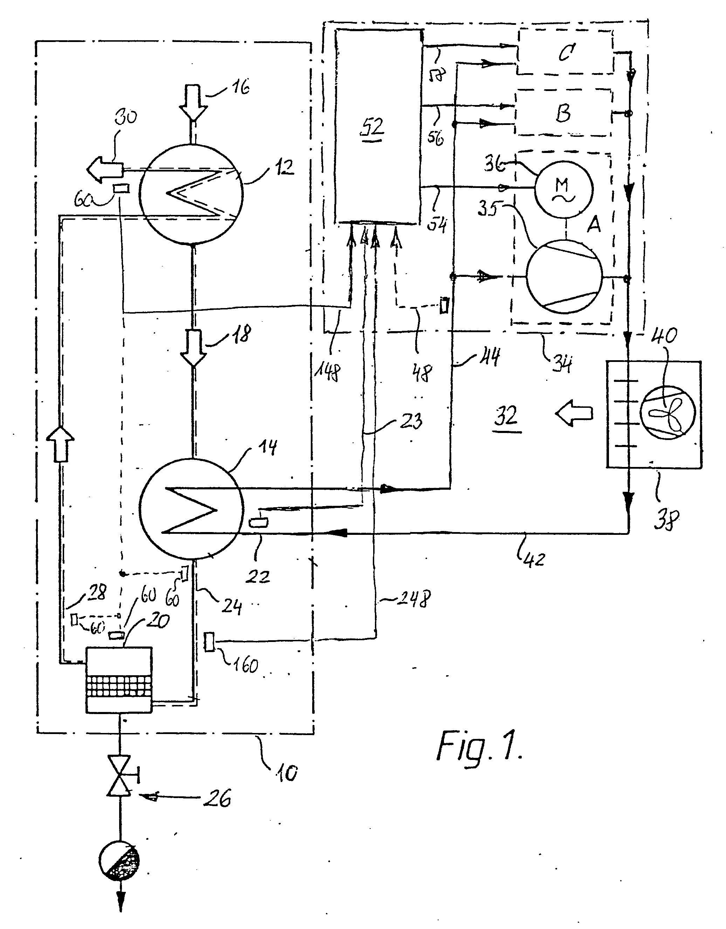

In Fig. 1 ist ein Drucklufttrockner dargestellt, der beispielsweise einen vertikal angeordneten Gas-Gas-Wärmeaustauscher 12 sowie einen beispielsweise daneben angeordneten Gas-Kältemittel-Wärmetauscher 14 umfaßt. Das zu behandelnde Gas, hier insbesondere aus einem Druckluftkompressor stammende, möglicherweise schon in gewisser Hinsicht vorgekühlte Druckluft wird dem Gas-Gas-Wärmetauscher 12 über einen Einlaß 16 zugeführt, wobei die Drucklufttemperatur beispielsweise 30 bis 40° C betragen mag. Vom Einlaß 16 strömt die Druckluft durch Wärmetauschereinrichtungen, bestehend aus Kühlschlangen, Kühlrippen o. dgl., vorzugsweises in eine Richtung von oben nach unten und kühlt sich dabei ab. Die Druckluft tritt aus dem Gas-Gas-Wärmetauscher 12 aus und wird dann über eine entsprechende Leitung 18 dem Gaseinlaß des Gas-Kältemittel-Wärmetauschers 14 zugeführt. Der Gas-Kältemittel-Wärmetauscher 14 enthält wiederum in bekannter Weise Kühlschlangen und Kühlrippen oder ähnliches, die mittels eines bei 22 zugeführten Kältemittels auf eine Temperatur nahe der Ausfriertemperatur der vom Gas mitgeführten Feuchtigkeit abgekühlt wird. Das vom Gas-Gas-Wärmetauscher 12 beispielsweise auf eine Temperatur von 20° C abgekühlte Gas wird in dem Gas-Kältemittel-Wärmetauscher so weit abgekühlt, daß es den Gas-Kältemittel-Wärmetauscher 14 mit einer Temperatur von beispielsweise 1,5° C bei 24 verläßt. Durch die Temperaturerniedrigung verflüssigt sich die Feuchtigkeit zu feinen Nebeltröpfchen, die sich teilweise auf der kalten Oberfläche des Gas-Kältemittel-Wärmetauschers niederschlagen, teilweise in einem nachgeschalteten besonderen Abscheider 20 mit Hilfe von Drahtgeflecht, Zykloneinrichtungen oder ähnlichem abgeschieden und anschließend mit Hilfe eines Kondensatableiters 26 aus der Anlage entfernt wird.

Das nun weitgehend trockene Gas tritt bei 28 wieder aus und kann gewünschtenfalls jetzt einem hier nicht dargestellten Filter zur Entfernung von Schmutzresten und Ölteilchen zugeführt werden, und gelangt dann in den Gas-Gas-Wärmetauscher 12 zurück, wo es zur Vorkühlung des bei 16 eintretenden warmen Gases dient. Dabei wärmt sich das getrocknete Gas wieder auf eine für den Gebrauch geeignete Temperatur von beispielsweise 20° an und tritt dann bei 30 zur weiteren Verwendung aus. Der Drucklufttrockner 10 wendet also das Energie sparende Gegenstromprinzip an und gibt ein angewärmtes, getrocknetes Gas ohne zusätzliche Heizquellen ab.

Insoweit entspricht der Aufbau des Drucklufttrockners dem Stand der Technik.

Es sei nun näher auf den Kältemittelkreislauf 32 eingegangen, der die Hintereinanderschaltung einer Kompressoreinrichtung 34, eines Kondensators 38, einer Zuführleitung 42 zum Gas-Kältemittel-Wärmetauscher 14 und eine Rückführleitung 44 zur Kompressoreinrichtung 34 umfaßt. Die Kompressoreinrichtung 34 besteht gemäß Fig. 1 aus drei parallelgeschalteten Einheiten A, B und C, die jeweils einen herkömmlichen Kompressor 35 sowie einen elektrischen Antriebsmotor 36 aufweisen. Das aus dem Gas-Kältemittelteuscher 14 kommende, im wesentlichen gasförmige Kältemittel wird in der Kompressoreinrichtung 34 verdichtet und anschließend einer Luftventilatorkühleinrichtung (oder anderer Art von Kühleinrichtung) 40 zugeführt und dort im isobaren Zustand wieder abgekühlt (und dadurch verflüssigt), so daß über die Zuführleitung 42 unter Druck stehendes, auf Raumtemperatur befindliches und damit im wesentlichen flüssiges Kältemittel dem Gas-Kältemittel-Wärmetauscher 14 wieder zugeführt werden kann. Durch eine Drossel oder auch durch Drosselwirkung wird eine Druckerniedrigung und damit gleichzeitige Abkühlung des Kältemittels erreicht, wodurch die gewünschte Wärmeaufnahme im Gas-Kältemittelwärmetauscher 14 erreicht wird. Über die Rückführung 44 wird dann das Kältemittel der Kompressoreinrichtung 34 wieder zugeführt.

Die Temperatur des Kältemittels im Gas-Kältemittel-Wärmetauscher und damit die Temperatur des diesen Wärmetauscher verlassenden Gases oder Druckluft hängt im wesentlichen von der Temperatur des Kältemittels ab. Um eine bestimmte gewünschte Kältemitteltemperatur aufrechtzuerhalten, kann über eine von der Leitung 44 ausgehende Meßleitung 48 oder über eine von einem Meßpunkt 22 hinter dem Drosselorgan ausgehende Meßleitung 23 der Druck des Kältemittels und damit dessen Temperatur abgefühlt und der Schalteinrichtung 52 zugeführt werden. Dieser Meßwert kann über die Meßleitung 48 der Schalteinrichtung 52 zugeführt werden, mit der die drei Einheiten A, B und C der Kompressoreinrichtung getrennt ansteuerbar sind, siehe die Steuerleitungen 54, 56, 58, mit Hilfe der jeweilige Antriebsmotor 36 der Einheit ein- oder auch ausgeschaltet werden kann.

Alternativ oder zusätzlich kann aber auch die Temperatur der Druckluft am Ausgang 30 und anderen Punkten 20, 24, 28 der Anlage mittels eines Sensors 60 erfaßt und über eine Meßleitung 148 der Schalteinrichtung 52 zugeführt werden: Diese Ansteuerung ist für den vorliegenden Zweck besonders gut geeignet, da sie auf die Menge der getrockneten Druckluft pro Zeiteinheit besonders empfindlich und schnell reagiert.

Der Aufbau der Schalteinrichtung 52 ist vorzugsweise derart getroffen, daß bei einer bestimmten vom Sensor 60 gemessenen tiefen Temperatur nur eine Kompressoreinheit, beispielsweise die Kompressoreinheit A in Tätigkeit gehalten wird.

Steigt der Verbrauch an Druckluft an, wird zu einem bestimmten Zeitpunkt die Kühlleistung dieses einen Kompressors nicht mehr ausreichen, um die Temperatur der Druckluft am Ausgang 30 oder anderen Meßpunkten 20, 24, 28 auf einem bestimmten Wert zu halten. Die Temperatur wird daher diesen Grenzwert überschreiten, woraufhin die Schalteinrichtung eine zweite Kompressoreinheit, beispielsweise die Einheit B in Betrieb setzt. Steigt der Druckluftdurchsatz noch weiter an, könnte es sein, daß auch die gemeinsame Leistung der Einheiten A und B nicht mehr ausreicht und die Temperatur der Druckluft am Ausgang 30 oder anderen Meßpunkten 20, 24, 28 einen zweiten Grenzwert, der etwas höher als der erste Grenzwert liegt, überschreitet, woraufhin die Schalteinrichtung 52 eine dritte Kompressoreinheit, beispielsweise die Einheit C in Betrieb setzt.

Sinkt der Bedarf an Druckluft wieder ab, wird auch die Temperatur am Ausgang 30 oder anderen Meßpunkten 20, 24, 28 wieder absinken, bis der zweite oder sogar der erste Grenzwert um einen bestimmten Betrag unterschritten werden, woraufhin die Schalteinrichtung 52 die Einheiten C und dann auch B wieder abschaltet. Ein dabei auftretender Unterschied zwischen Einschalttemperatur und Abschalttemperatur (Hysterese) kann auftreten.

Es ist klar, daß zusätzliche Regeleinrichtungen vorgesehen sein können, wie sie beim Stand der Technik beschrieben werden, beispielsweise kann für die genauere Steuerung insbesondere im Grundlastbetrieb, bei der z. B. nur die Kompressoreinrichtung A in Betrieb ist, eine Bypasseinrichtung vorgesehen sein, wie beim Stand der Technik im einzelnen beschrieben ist und daher hier nicht näher behandelt zu werden braucht.

Um eine möglichst gleichförmige Auslastung der einzelnen Kompressoreinheiten zu erreichen, kann die Schalteinrichtung 52 eine Betriebszeitzähleinrichtung aufweisen, die derart aufgebaut ist, daß nach einer vorbestimmten Betriebszeit der ersten Kompressoreinrichtung A, die die Grundlast trägt, statt dessen die Kompressoreinheit C als Grundlastlieferant gewählt wird. Ein entsprechender Austausch kann selbstverständlich auch bezüglich weiterer Kompressoreinheiten erfolgen, falls solche vorhanden sind, beispielsweise die in Fig. 1 dargestellte Kompressoreinheit B. Für diese Art der Schaltung ist es günstig, wenn alle Kompressoreinheiten gleiche Leistung aufweisen, d. h., wenn A = B = C ist.

Bei sehr stark schwankenden Bedarfsanforderungen kann es aber auch von Vorteil sein, die Leistung der einzelnen Kompressoreinheiten A, B und C ungleich aufzubauen, beispielsweise der Kompressoreinheit B eine doppelte Leistung zu geben, wie sie die Kompressoreinheiten A und C aufweisen. Dann würde man darauf verzichten, den Kompressor B mit der Grundlast zu beaufschlagen, so daß nur die Einheiten A und C wechselweise die Grundlast tragen, hätte dafür aber die Möglichkeit, neben der einfachen Grundlast und der doppelten Grundlast (Einheiten A und C sind eingeschaltet) und neben der dreifachen Grundlast (Einheiten A und B oder C und B) noch die vierfache Grundlast aufzunehmen, in welchem Falle die Einheiten A, B und C in Betrieb wären.

Ist der Zeitanteil, der nur die Grundlast erfordert, vergleichsweise klein oder wird eine besonders genaue Anpassung der Kompressorleistung an das geforderte Druckluftvolumen gewünscht, kann gemäß einer noch anderen Alternative der Kompressoreinheit B die doppelte Leistung wie der Kompressoreinheit A gegeben werden, während die Kompressoreinheit C die vierfache Leistung erhalten würde. Durch diese Stufung kann man durch entsprechende Auswahl einer oder mehrerer der drei Kompressoreinheiten alle Werte von einfacher bis zur siebenfachen Grundlast erhalten, wie eingangs bereits erläutert.

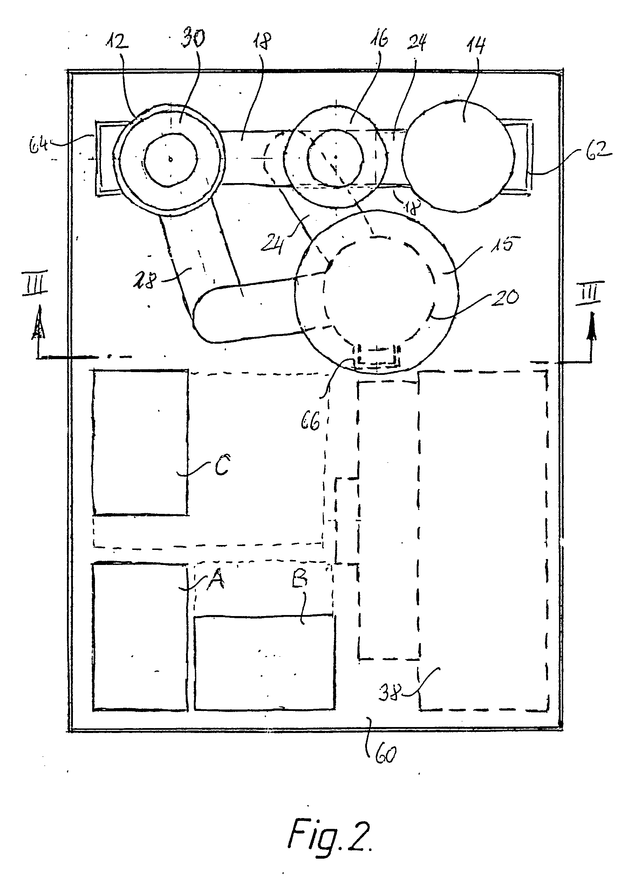

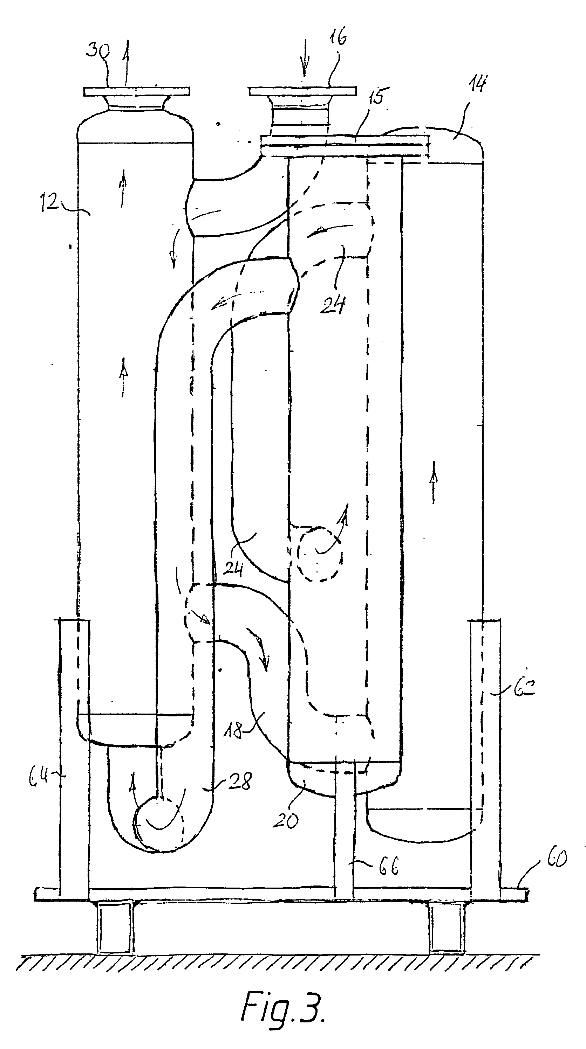

Die Anordnung von beispielsweise drei Kompressoreinheiten in einem Drucklufttrockner läßt sich auch konstruktiv in einer kompakten Anordnung verwirklichen, wie die Fig. 2 erkennen läßt. Auf einer rechteckigen Grundfläche ist dort der Gas-Gas-Wärmetauscher 12 in senkrechter Anordnung zu erkennen, mit dem Anschlußflansch 16 zur Zufuhr von zu behandelnder Druckluft und dem Abfuhrflansch 30 zur Ableitung der getrockneten Druckluft. Des weiteren ist zu erkennen der Gas-Kältemittel-Wärmetauscher 14 sowie der zwischen den beiden Wärmetauschern angeordnete hier noch Filtereinrichtungen aufweisende Abscheider 20, wobei der Filterwechsel mit Hilfe einer abschraubbaren Platte 15 erfolgen kann, wie auch aus Fig. 3, einer Seitenansicht längs der Pfeile III-III der Fig. 2, zu erkennen ist.

Die Wärmetauschersäulen 12, 14 sowie die Abscheidersäule 20 werden von auf einer Grundplatte 60 angeordneten Winkeleisen 62, 64, 66 gehalten, während die Kompressoreinheiten A, B und C sowie der Kondensator 38 direkt auf der Grundplatte 60 aufgesetzt werden können. Dargestellt ist eine Ausführungsform mit gleich großen Kompressoreinheiten A, B und C, jedoch ist zu erkennen, daß noch Platz ist, um die Einheiten B und C entsprechend weiteren Ausführungsformen zu vergrößern.

Die Schalteinrichtung 52 sowie die relativ dünnen Kältemittelleitungen sowie die elektrischen Verbindungsleitungen sind hier nicht dargestellt, da sie relativ wenig Platz beanspruchen. Erkennbar sind jedoch die Verbindungsleitungen für die Druckluft.

Es ist deutlich, daß alle Einrichtungen in einem gemeinsamen vorzugsweise rechteckigen Gehäuse angeordnet werden können.

Da die einzelnen Kompressoreinheiten A, B und C jeweils am Gehäuserand angeordnet sind, ist es auch möglich, eine Wartung in der Weise vorzunehmen, daß, während der Drucklufttrockner weiterläuft, einzelne der Kompressoreinheiten A, B oder C nach entsprechendem Abtrennen der Anschlüsse herausgenommen, gewartet oder ausgetauscht werden.

## Ansprüche

1. Drucklufttrockner, mit einem Kältemittelkreislauf (32) der die Hintereinanderschaltung einer Kompressoreinrichtung (34) mit nachgeschaltetem Kondensator (38), einer Zuführleitung (42) zu einem Gas-Kältemittel-Wärmetauscher (14) und eine Rückführleitung (44) von diesem zur Kompressoreinrichtung (34) umfaßt, wobei die Kompressoreinrichtung von einer Schalteinrichtung (52) ansteuerbar ist, die ihrerseits Temperaturmeßdaten des Druckluftrockners auswertet, dadurch gekennzeichnet, daß die Kompressoreinrichtung (34) aus mehreren, insbesondere drei in dem Kältemittelkreislauf parallelgeschalteten, voneinander unabhängigen Kompressoreinheiten (A, B, C) besteht, die von der Schalteinrichtung (52) getrennt ansteuerbar sind.

2. Drucklufttrockner nach Anspruch 1, dadurch gekennzeichnet, daß die Schalteinrichtung (52) von einem die Temperatur der Druckluft am Anlagenausgang (30), oder anderen Meßpunkten (20, 24, 28) erfassenden Sensor (60) angesteuert wird.

3. Drucklufttrockner nach Anspruch 1, dadurch gekennzeichnet, daß die Schalteinrichtung von einem die Temperatur der Druckluft am Ausgang des Gas-Kältemittel-Wärmetauschers (14) erfassenden Sensor (160) angesteuert wird.

4. Drucklufttrockner nach Anspruch 1, 2 oder 3, dadurch gekennzeichnet, daß die Schalteinrichtung (52) so aufgebaut ist, daß zusätzlich auch die Temperatur des der Kompressoreinrichtung zugeführten Kältemittels (48, 22) ausgewertet wird.

5. Drucklufttrockner nach einem der Ansprüche 1 bis 4, wobei zwischen dem Ausgang der Kompressoreinrichtung (34) und dem Eingang der Kompressoreinrichtung (34) ein Bypass mit einem Bypassventil vorgesehen ist, dadurch gekennzeichnet, daß die Schalteinrichtung (52) das Bypassventil derart anzusteuern in der Lage ist, daß das der Kompressoreinrichtung (34) zugeführte Kältemittel eine bestimmte Temperatur nicht unterschreitet.

6. Drucklufttrockner nach einem der Ansprüche 1 bis 5, dadurch gekennzeichnet, daß die Schalteinrichtung (52) von einem programmierbaren Mikroprozessor ansteuerbare Halbleitereinrichtungen umfaßt.

7. Drucklufttrockner nach einem der Ansprüche 2 bis 6, dadurch gekennzeichnet, daß die Schalteinrichtung (52) derart aufgebaut ist, daß bei einem ersten Wert einer von einem jeweiligen Sensor (z. B. 60) erfaßten Temperatur nur ein Kompressor (erster Kompressor) (A) in Tätigkeit gehalten wird, bei Überschreiten eines bestimmten höheren Wertes ein zweiter Kompressor (B) eingeschaltet und bei Überschreiten eines noch höheren weiteren Wertes ein dritter Kompressor (und ggf. weitere Kompressoren) in Betrieb gesetzt wird.

8. Drucklufttrockner nach Anspruch 7, dadurch gekennzeichnet, daß die Schalteinrichtung (52) derart aufgebaut ist, daß nach einer vorbestimmten Betriebszeit der dritte Kompressor (C) an die Stelle des ersten Kompressors (A) geschaltet wird.

9. Drucklufttrockner nach einem der Ansprüche 1 bis 8, dadurch gekennzeichnet, daß jede der drei (oder weiteren) Kompressoreinheiten (A, B, C) einen Kompressor der Leistung A, B bzw. C und einen zugehörigen elektrischen Motor aufweist, und daß Kompressor (35) und Motor (36) jeweils in einem gekapselten Gehäuse angeordnet sind.

10. Drucklufttrockner nach Anspruch 9, dadurch gekennzeichnet, daß A = B = C ist.

11. Drucklufttrockner nach Anspruch 9, dadurch gekennzeichnet, daß A = C und B = 2A ist und die Schalteinrichtung (52) derart aufgebaut ist, daß bei dem niedrigsten Temperaturwert nur erster oder dritter Kompressor (A bzw. C) in Betrieb gehalten werden, daß bei Überschreiten des ersten Temperaturwertes auf den zweiten Kompressor (B) umgeschaltet wird, daß bei weiterer Erhöhung der Temperatur auf einen noch höheren Temperaturwert auf ersten (oder dritten) und zusätzlich den zweiten Kompressor umgeschaltet wird, und daß bei Überschreiten eines noch weiteren Temperaturwertes alle drei (oder weitere) Kompressoren in Betrieb setzbar sind.

12. Drucklufttrockner nach Anspruch 9, dadurch gekennzeichnet, daß B = 2A und C = 4A ist und daß die Steuerungseinrichtung (52) derart von jeweils höheren Temperaturwerten in einer solchen Weise beeinflußt wird, daß beginnend mit dem ersten Kompressor (A) eine Zuschaltung oder Umschaltung auf den zweiten Kompressor (B) bzw. den dritten (oder weiteren) Kompressor (C) so erfolgt, daß sich folgende Reihenfolge ergibt:

1. A (Leistungsfaktor 1)
2. B (2)
3. B + A (1 + 2 = 3)
4. C (4)
5. C + A (4 + 1 = 5)
6. C + B (4 + 2 = 6)
7. C + B + A (4 + 2 + 1 = 7).

*Fig.1.*

Fig.2.

*Fig.3.*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-3 522 974  (VIA GESELLSCHAFT FÜR VERFAHRENSTECHNIK mbH) <br> * Insgesamt * <br> --- | 1-12 | F 25 B  49/00 |
| Y | US-A-4 384 462  (J. OVERMAN et al.) <br> * Insgesamt * <br> --- | 1-6,9, 12 | |
| Y | GB-A-1 553 217  (ISOVEL LTD) <br> * Insgesamt * <br> --- | 1,7-10 | |
| Y | US-A-4 535 602  (ALSENZ et al.) <br> * Zusammenfassung; Spalte 8, Zeilen 45-53; Figur 1 * <br> --- | 1,9,11 | |
| A | EP-A-0 080 916  (FROID SATAM BRANDT) <br> --- | | |
| A | US-A-4 633 672  (PERSEM et al.) <br> --- | | |
| A | US-A-4 102 149  (CONLEY et al.) <br> ----- | | |

RECHERCHIERTE
SACHGEBIETE (Int. Cl.4)

F 25 B
F 24 F
B 01 D

Der vorliegende Recherchenbericht wurde für alle Patentansprüche erstellt

| Recherchenort | Abschlußdatum der Recherche | Prüfer |
|---|---|---|
| DEN HAAG | 18-05-1988 | SILVIS H. |